Europäisches Patentamt

European Patent Office

Office européen des brevets

(11) Veröffentlichungsnummer: **0 085 789**

A1

# (12) EUROPÄISCHE PATENTANMELDUNG

(21) Anmeldenummer: 82112134.0

(22) Anmeldetag: 31.12.82

(51) Int. Cl.³: **B 60 K 41/02**

(30) Priorität: 10.02.82 DE 3204651

(43) Veröffentlichungstag der Anmeldung:
17.08.83 Patentblatt 83/33

(84) Benannte Vertragsstaaten:
AT BE CH FR GB IT LI LU NL SE

(71) Anmelder: Delwing, Dieter
Im Rötel 21
CH-6300 Zug(CH)

(72) Erfinder:
Der Erfinder hat auf seine Nennung verzichtet

(74) Vertreter: Neubauer, Hans-Jürgen, Dipl.-Phys. et al,
Fauststrasse 30
D-8070 Ingolstadt(DE)

(54) Kupplungsvorrichtung.

(57) Die Erfindung betrifft eine Kupplungsvorrichtung, die für einen intermittierenden oder Freilaufbetrieb eines Fahrzeugs geeignet ist und dabei insbesondere Bedienungsfehler und ein Fehlverhalten eines Fahrers beim Abschalten des Freilaufbetriebs verhindern soll. Ein Kupplungshebel (4) ist dabei mit Hilfe eines Kupplungspedals (18) und eines steuerbaren Kolbens (6) betätigbar. Ein Handschalter (21) zum Abschalten der Freilaufautomatik im durch den Kolben (6) betätigten offenen Zustand der Kupplung wird erst dann wirksam, wenn das Kupplungspedal (18) durchgetreten ist und ein Kontakt (19) geschlossen ist. Erst jetzt gibt die Steuerung eine Abflußleitung (9) frei, so daß der Kolben (6) entlastet wird und zurückgeschoben werden kann. Durch das durchgetretene Kupplungspedal (18) wird dabei jedoch die Bewegung des Kupplungshebels (4) unmittelbar vom Fahrer über das Kupplungspedal (18) übernommen. Der Fahrer kann dann wie gewohnt die Kupplung mit Hilfe des Kupplungspedals (18) einrücken.

EP 0 085 789 A1

./...

FIG. 1

DIPL.-PHYS. H.-J. NEUBAUER
VNR 122297

Herr
Dieter Delwing
Am Rötel 21

CH-6300 Zug

PATENTANWALT 0085789
BEIM EUROPÄISCHEN PATENTAMT
ZUGELASSENER VERTRETER

Schillerstraße 83
D-8070 Ingolstadt
Telefon 0841/59999

P 29DE/82/36

## Kupplungsvorrichtung

Die Erfindung betrifft eine Kupplungsvorrichtung gemäß dem Oberbegriff des Anspruchs 1.

Wegen der zunehmenden Rohölverknappung wird es erforderlich, Kraftfahrzeuge möglichst energiesparend zu betreiben. Ein Weg dazu ist die sog. intermittierende Fahrweise. Dabei wechseln Beschleunigungsphasen mit Motorantrieb und antriebsfreies Rollen einander ab. Beschleunigt wird mit etwa dreiviertel durchgetretenem Gaspedal auf ca. die halbe Höchstdrehzahl. Anschließend wird ausgekuppelt und das Fahrzeug rollt antriebsfrei. Wenn die dabei gefahrene Geschwindigkeit bis ca. 10% über bzw. unter die gewünschte durchschnittliche Geschwindigkeit pendelt, kann ca. 20% Kraftstoff gegenüber dem Betrieb mit einer entsprechenden konstanten Geschwindigkeit eingespart werden.

Bei dem beschriebenen intermittierenden Betrieb oder Freilaufbetrieb wird die Kupplung des Fahrzeugs sehr häufig betätigt. Herkömmliche Kupplungen sind dafür nicht geeignet, da sich die Kupplungsbeläge zu schnell abnutzen

0085789

würden und zu oft ausgewechselt werden müßten. Weiter müßte bei einer herkömmlichen Kupplungseinrichtung zur Realisierung des Freilaufeffekts die Kupplung ständig durchgetreten werden, bzw. ein eingelegter Gang ausgeschaltet werden. Dies wäre für den Fahrer äußerst aufwendig und unbequem.

Vom Anmelder wurde daher in einer älteren Anmeldung bereits eine Freilaufautomatik vorgeschlagen, bei der zusätzlich zu der Betätigung mit einem Kupplungspedal eine Zylinder-Kolben-Einheit die Kupplung betätigen kann. Die Zylinder-Kolben-Einheit ist über ein Zweiwegemagnetventil, das durch zwei Elektromagneten steuerbar ist, zum Ausrücken der Kupplung mit einer Druckleitung und zum Einrücken der Kupplung mit einer Abflußleitung verbunden. Die elektrische Steuerung der beiden Magnete erfolgt mit Hilfe eines am Gaspedal angebrachten Kontakts, der beim Loslassen des Gaspedals schaltet und dabei den zum Öffnen der Kupplung dienenden Elektromagnet ansteuert. Der Fahrer kann somit bequem nach dem Einschalten der Freilaufautomatik mittels eines Handschalters nur durch Zurücknehmen des Gaspedals bequem den Freilaufbetrieb herbeiführen.

Zum Wiedereinleiten der Beschleunigungsphase muß die Kupplung wiederum geschlossen werden. Dazu wurde vorgeschlagen, die Drehzahlen an der Motorabtriebs- und Getriebeantriebswelle aufzunehmen und zu vergleichen und die Kupplung erst bei Drehzahlgleichheit automatisch über eine Steuereinheit zu schließen. Wenn das Fahrzeug im Freilaufbetrieb rollt und der Fahrer zum erneuten Beschleunigen Gas gibt, schließt somit die Kupplung nicht sofort, sondern der Motor dreht so lange hoch, bis Drehzahlgleichheit mit der Getriebeantriebswelle festgestellt wird. Erst jetzt wird die Kupplung weitgehend ruckfrei und ohne starke Abnützung der Kupplungsbeläge geschlossen.

Der beschriebene Freilaufeffekt kann mit dem Einlegen des ersten und des Rückwärtsgangs automatisch ausgeschaltet werden, so daß die Kupplung in dieser Betriebsweise nur mit Hilfe des Kupplungspedals geöffnet bzw. geschlossen werden kann.

Die vorliegende Erfindung betrifft eine Ausgestaltung und Verbesserung der vorbeschriebenen Anordnung.

Die Freilaufautomatik kann mit Hilfe des vorgenannten Handschalters ausgeschaltet werden, um beispielsweise bei längeren Talfahrten zur Schonung der Bremsen und zur Sicherheit des Fahrzeugs die Motorbremse auch in höheren Gängen zur Verfügung zu haben.

Das Ausschalten des Freilaufeffekts bei fahrendem Wagen mit betätigtem Gaspedal, wobei die Kupplung geschlossen ist, kann ohne Schwierigkeiten erfolgen, da die Kupplung ja ohnehin hier geschlossen ist und keine unmittelbare Änderung des Betriebszustandes dabei eintritt. Anders verhält es sich aber, wenn das Fahrzeug im Freilauf mit losgelassenem Gaspedal rollt. Um die Motorbremse einzulegen, muß die Kupplung geschlossen werden. Dies kann nicht einfach dadurch geschehen, daß der die Kupplung schließende Elektromagnet angesteuert wird und die Kupplung einrückt, da der Motor mit niederer Drehzahl im Leerlauf läuft und dagegen die Getriebeantriebswelle mit der der Freilaufgeschwindigkeit entsprechenden hohen Drehzahl dreht. Bei einem ruckartigen Schließen der Kupplung würde somit ein enormer Ruck, der zudem die Kupplungsbeläge stark abnützt, auftreten.

In der vorbeschriebenen Kupplungsvorrichtung muß daher der Fahrer den Handschalter zum Ausschalten der Freilaufautomatik betätigen, wodurch die Kupplung noch nicht unmittelbar geschlossen wird, und zusätzlich auch das Gaspedal betätigen, um die Drehzahl des im Leerlauf

0085789

drehenden Motors auf die Drehzahl der Getriebeantriebswelle zu erhöhen und damit das vorbeschriebene ruckfreie Einkuppeln zu ermöglichen.

Da aber Gasgeben im Unterbewußtsein des Fahrers "Beschleunigung" bedeutet, hier jedoch durch das Gasgeben
die Motorbremse eingelegt werden soll, d. h. eine
Bremswirkung erzielt werden soll, kann hierbei eine
Fehlbedienung und ein Fehlverhalten des Kraftfahrzeuglenkers eintreten.

Aufgabe der Erfindung ist es demgegenüber, eine Kupplungsvorrichtung im Rahmen einer Freilaufautomatik zu schaffen, mit der das Ausschalten der Kupplungsautomatik bzw.
das Einlegen der Motorbremse vereinfacht und in der Handhabung sicherer gestaltet wird.

Diese Aufgabe wird mit den kennzeichnenden Merkmalen
des Anspruchs 1 gelöst.

Gemäß Anspruch 1 soll der Schaltkreis, der den Ein-Aus-
Handschalter enthält, bei der Handschalterstellung AUS
erst aktiviert werden, wenn ein Kupplungspedalschalter
betätigt ist. Der Kupplungspedalschalter wird bei durchgetretenem Kupplungspedal betätigt.

Wenn das Fahrzeug im Freilauf bei zurückgenommenem Gaspedal rollt und die Motorbremse eingelegt werden soll,
wird daher folgendermaßen verfahren:
Der Fahrer schaltet den Handschalter in die Stellung
"Freilaufautomatik AUS". Dadurch geschieht vorerst
nichts. Nun muß der Fahrer, ähnlich wie beim gewohnten
Zurückschalten auf einen kleineren Gang die Kupplung
durchtreten, so daß der Kupplungspedalschalter betätigt
ist. Nun schaltet die Kupplungsautomatik aus, d. h. das
Zweiwegeventil verbindet die Zylinder-Kolben-Einheit
mit der Abflußleitung. Dadurch wird jedoch nun die Kupplung nicht schlagartig geschlossen, sondern der Fahrer übernimmt von der Automatik wegen des durchgetretenen Kupplungspedals den ausgerückten Zustand der Kupplung. Der Fahrer kann nun durch langsames Zurücknehmen des Kupplungspedals in gewohnter Weise, evtl. unter zusätzlichem leichten Gasgeben, die Kupplung einrücken, so daß die Motorbremse eingelegt ist. Da diese Bewegungsvorgänge bei herkömmlichen Kupplungsvorrichtungen zum Herunterschalten aus einem höheren Gang (ebenfalls zum Einlegen der Motorbremse) eintrainiert und gewohnt sind, ist dabei ein Fehlverhalten des Fahrers praktisch ausgeschlossen. Durch die gezeigte Einrichtung wird somit eine Freilaufautomatik so weitergebildet, daß sie zu keinen Bedienungsfehlern Anlaß gibt und daher tatsächlich zum Zwecke der Energieeinsparung von den jeweiligen Kraftfahrzeuglenkern angenommen und eingeschaltet werden wird.

Mit den Merkmalen des Anspruchs 2 wird eine einfache Steuerungsmöglichkeit der zwei Elektromagnete des das Druckmedium steuernden Zweiwegeventils aufgezeigt. Der hier angesprochene mechanische Kippschalter kann und wird in einer praktischen Ausführungsform durch ein elektronisches Bauelement in der Steuer- bzw. Rechnereinheit gebildet sein. Die Steuerung des Zweiwegeventils könnte auch durch einen mit einer Feder zusammenwirkenden Elektromagneten durchgeführt sein, zum Zwecke der Energieeinsparung sind jedoch zwei Elektromagnete, die mit Impulsen gesteuert werden und die das Zweiwegeventil in eine jeweils fixierte Stellung bewegen, vorzuziehen.

Gemäß Anspruch 3 wird vorgeschlagen, das Ein-und Ausschalten der Freilaufautomatik auch im Hinblick auf die Fahrgeschwindigkeit des Fahrzeugs zu steuern. Die Freilaufautomatik wird dazu bei Überschreiten einer gewissen Fahrgeschwindigkeit, z. B. 20 km/h, ein- und bei Verminderung dieser Fahrgeschwindigkeit ausgeschaltet.

In Anspruch 4 wird dazu eine dem Anspruch 1 entsprechende Maßnahme vorgeschlagen, ebenfalls den Steuerkreis, der das Ausschalten unter einer bestimmten Fahrgeschwindigkeit (20 km/h) bewirkt, mit dem Kupplungspedalschalter zu koppeln, so daß auch in diesem Fall die offene Kupplungsstellung vom Kupplungspedal durch den Fahrer übernommen wird. Der Vorteil liegt hier insbesondere darin, daß dadurch das Wirksamwerden der Motorbremse auch automatisch erfolgen kann, da hierbei der Fahrer das Fahrzeug in den meisten Fällen mit durchgetretenem Kupplungspedal abbremsen und einen niedrigeren Gang einschalten muß.

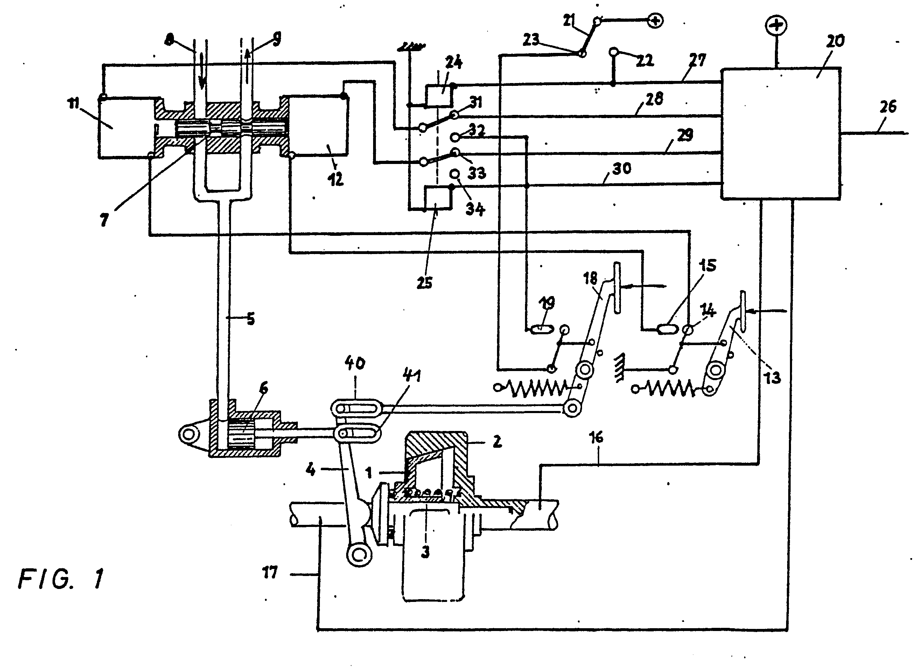

Weitere Einzelheiten, Merkmale und Vorteile der Erfindung ergeben sich aus der nachfolgenden Beschreibung einer Ausführungsform anhand der Zeichnung.

In der einzigen Figur wird ein in einem Motorschwungrad 2 angeordneter Kupplungskonus mit Hilfe eines Kupplungshebels 4 gegen eine Kupplungsfeder 3 zum Öffnen einer Kupplung betätigt.

Der Kupplungshebel 4 kann über eine mit einem Längsschlitz 40 versehene Zugstange mit Hilfe eines Kupplungspedals 18 betätigt werden.

Zur zusätzlichen Betätigung der Kupplung zu der Betätigungsmöglichkeit mit Hilfe des Kupplungspedals 18 dient ein hydraulischer Servokolben 6, dessen Kolbenstange am Kupplungshebel 4 ebenfalls mit einem Längsschlitz 41 angreift, so daß der Kupplungshebel 4 sowohl mit dem Kupplungspedal 18 als auch durch den Servokolben 6 voneinander unabhängig betätigt werden kann.

Die zum Hubraum des Servokolbens 6 führende Leitung 5 kann über ein Zweiwegeventil 7 abwechselnd mit einer Druckleitung 8 oder mit einer Abflußleitung 9 verbunden werden, wobei eine Ventilstange 7 durch zwei Elektromagnete 11, 12 abwechselnd in seine eine oder andere Endlage verschoben wird.

Die Verbindung zum Masseanschluß der beiden Elektromagnete 11, 12 führt über zwei durch ein Gaspedal 13 betätigte Kontakte 14, 15, in der Weise, daß bei losgelassenem Gaspedal 13 über dem Kontakt 14 die Verbindung mit der Masse zu dem die Kupplung öffnenden Elektromagneten 11, und bei betätigtem Gaspedal 13 über dem Kontakt 15 der die Kupplung schließende Elektromagnet 12 mit Masse verbunden ist.

In eine Rechnereinheit 20 werden den Umdrehungszahlen entsprechende Frequenzwerte 16 von der Motorabtriebswelle, Frequenzwerte 17 von der Getriebeantriebswelle und Frequenzwerte einer Tachoantriebswelle 26 als Aussage für die Fahrgeschwindigkeit laufend eingegeben und zur Drehzahlsynchronisierung verglichen.

Die Elektromagnete 11, 12 werden über Kontakte 31, 32 und 33 eines mit zwei Elektromagneten 24, 25 alternierend betätigten Kippschalters mit dem Pluspol verbunden. Die Elektromagnete 24, 25 des Kippschalters können außer durch die Rechnereinheit 20 auch über Kontakte 22, 23 eines Handschalters 21 unter Strom gesetzt werden.

Über eine Leitung 27 wird aus der Rechnereinheit 20 zum Einschalten der Freilaufautomatik der Elektromagnet 24 des Kippschalters unter Strom gesetzt, wenn die Fahrgeschwindigkeit eine bestimmte Grenze (z. B. 20 km/h) überschritten hat; über eine Leitung 30 wird der Elektromagnet 25 zur Abschaltung der Freilaufautomatik bei darunterliegender Fahrgeschwindigkeit unter Strom gesetzt. Bei eingeschalteter Automatik wird der die Kupplung schließende Elektromagnet 12 über den Kontakt 31 und über eine Leitung 28 mit der Rechnereinheit 20

verbunden. Über diese Leitung 28 kann der Elektromagnet 12 nur bei Drehzahlgleichheit der Motorabtriebs- und Getriebeantriebswelle Strom erhalten und der die Kupplung öffnende Elektromagnet 11 ist über den Kontakt 33 und Leitung 29 mit der Rechnereinheit verbunden.

Die beiden Elektromagnete 24, 25 können aber auch über die beiden Kontakte 22 oder 23 des Handschalters 21 unmittelbar zum Ein- oder Ausschalten der Freilaufautomatik unter Strom gesetzt werden. Dazu kann der mit dem Pluspol verbundene Handschalterkontakt 22 am Elektromagneten 24 zur Einschaltung der Freilaufautomatik unmittelbar unter Strom gesetzt werden. Über den Kontakt 23 kann zum Ausschalten der Freilaufautomatik der Elektromagnet 25 des Kippschalters unter Strom gesetzt werden, wobei die entsprechende Leitung aber über den an das Kupplungspedal 18 angeordneten Kontakt 19 führt, der nur geschlossen ist, wenn das Kupplungspedal 18 durchgetreten ist.

Wird aber zur Ausschaltung der Freilaufautomatik der Kippschaltermagnet 25 betätigt, wird die Leitung 28, die über den Kontakt 31 zu dem die Kupplung schließenden Elektromagnet 12 aus der Rechnereinheit führt, unterbrochen und der Elektromagnet 12 über den Kontakt 32 und über den Kontakt 19 des Kupplungspedals 18 unmittelbar unter Strom gesetzt. Die Leitung 29 aus der Rechnereinheit 20 über den Kontakt 33 zu dem die Kupplung öffnenden Elektromagneten 11 ist dann ebenfalls unterbrochen.

Die vier Elektromagnete 11, 12 und 24, 25 sollen so ausgeführt sein, daß sie mit Impulsen ansteuerbar sind und die Stromzuführung zu ihnen soll mit entsprechenden Mitteln auf kurze Stromimpulse begrenzt werden, so daß der elektrische Energiehaushalt im Fahrzeug möglichst wenig belastet ist.

Wie die vorstehende Beschreibung veranschaulicht, erleichtert die erfindungsgemäße Anordnung einem Fahrer ganz wesentlich das Ausschalten einer Freilaufautomatik auch in dem Zustand, wenn das Fahrzeug mit eingeschaltetem Freilauf rollt. Ein Fehlverhalten oder ein Bedienungsfehler des Fahrers ist bei der Verwendung der erfindungsgemäßen Anordnung ausgeschlossen. Beim Abbremsen des Fahrzeugs wird der Freilaufeffekt sogar automatisch ausgeschaltet, so daß bei der erfindungsgemäßen Anordnung die Fahrsicherheit bei Fahrzeugen mit eingebauter Freilaufautomatik stets erhalten bleibt.

DIPL.-PHYS. H.-J. NEUBAUER

VNR 122297

Herr

Dieter Delwing

Am Rötel 21

CH-6300 Zug

PATENTANWALT

BEIM EUROPÄISCHEN PATENTAMT

ZUGELASSENER VERTRETER

0085789

Schillerstraße 83

D-8070 Ingolstadt

Telefon 08 41/5 99 99

P 29DE/82/36

Patentansprüche

1. Kupplungsvorrichtung für ein Kraftfahrzeug

- mit einer Kupplung,

- mit einem Kupplungspedal zur Betätigung der Kupplung,

- mit einer der Kupplung vorgeschalteten, mit Druckmedium beaufschlagbaren Zylinder-Kolben-Einheit zur automatischen Betätigung der Kupplung an Stelle des Kupplungspedals,

- mit einer Steuereinrichtung zur Steuerung des Druckmediums,

- mit einem Gaspedal mit Gaspedalschalter, der bei zurückgenommenem Gaspedal schaltet, der mit der Steuereinrichtung verbunden ist, und die Steuereinrichtung bei zurückgenommenem Gaspedal die Kupplung öffnet,

- mit je einem mit der Steuereinrichtung verbundenen Drehzahlaufnehmer an der Motorabtriebs- und der Getriebeantriebswelle und einer Vergleichereinheit in der Steuereinheit, wobei die Steuereinheit bei Drehzahlgleichheit beider Wellen und betätigtem Gaspedal die Kupplung schließt,

- mit einem Ausschaltkreis mit Handschalter, der mit der Steuereinheit verbunden ist und die automatische Betätigung der Kupplung ausschaltet, dadurch gekennzeichnet,
- daß bei geöffneter Kupplung (1, 2) eine "Aus" Schaltung des Handschalters (21) erst dann wirksam wird, wenn ein am Kupplungspedal (18) angeordneter Kupplungspedalschalter (19) durch Treten des Kupplungspedals (18) betätigt ist.

2. Kupplungsvorrichtung nach Anspruch 1,
- mit einer Steuereinrichtung zur Steuerung des Druckmediums, die ein Zweiwegeventil, das über zwei Elektromagnete betätigbar ist, und die eine Rechnereinheit enthält,
dadurch gekennzeichnet,
- daß das Ein- und Ausschalten zur automatischen Betätigung der Kupplung durch einen Kippschalter erfolgt, der durch zwei Elektromagnete (24, 25) abwechselnd betätigbar ist in der Weise, daß beim Einschalten der die Kupplung schließende Elektromagnet (12) am Zweiwegeventil (7) mit der synchronisierten Leitung (28) der Rechnereinheit (20) verbunden ist,
- und beim Ausschalten die aus der Rechnereinheit (20) zu dem die Kupplung öffnenden Elektromagnet (11) führende Stromleitung (29) unterbrochen und die zu dem die Kupplung schließenden Elektromagnet (12) des Zweiwegeventils (7) führende Stromleitung (28) zu der Rechnereinheit (20) unterbrochen und mit der über den Kupplungspedalschalter (19) führenden Leitung des die automatische Kupplungsbetätigung ein- und ausschaltenden Handschalters (21) verbunden ist.

3. Kupplungsvorrichtung nach Anspruch 1 oder 2, dadurch gekennzeichnet, daß mit der Steuereinrichtung ein Geschwindigkeitsaufnehmer (26) verbunden ist und die automatische Kupplungsbetätigung nach Überschreiten einer gewissen Fahrgeschwindigkeit ein- und darunter ausgeschaltet ist.

4. Kupplungsvorrichtung nach Anspruch 3, dadurch gekennzeichnet, daß der Steuerkreis, der das Ausschalten unter einer bestimmten Fahrgeschwindigkeit bewirkt, über einen Schalter (19) führt, der nur aktiviert wird, wenn das Kupplungspedal (18) durchgetreten ist.

FIG. 1

1/1

0085789

# EUROPÄISCHER RECHERCHENBERICHT

| | EINSCHLÄGIGE DOKUMENTE | | EP 82112134.0 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) | |
| A | AT - B - 239 655 (BELTOMATIC) | 1 | B 60 K 41/02 | |
| A,P | EP - A1 - 0 064 169 (DELWING) | 1 | | |
| A | DE - A - 2 307 702 (BERLIET) | 1,3 | | |

| | |
|---|---|
| | RECHERCHIERTE SACHGEBIETE (Int. Cl. ³) |
| | B 60 K |

**Der vorliegende Recherchenbericht wurde für alle Patentansprüche erstellt.**

| Recherchenort | Abschlußdatum der Recherche | Prüfer |
|---|---|---|
| WIEN | 29-04-1983 | DENK |